(19) Europäisches Patentamt
European Patent Office
Office européen des brevets

(11) **EP 3 283 816 B1**

(12) **EUROPÄISCHE PATENTSCHRIFT**

(45) Veröffentlichungstag und Bekanntmachung des Hinweises auf die Patenterteilung:
**25.03.2020   Patentblatt 2020/13**

(21) Anmeldenummer: **16709689.0**

(22) Anmeldetag: **24.02.2016**

(51) Int Cl.:
*F21S 41/16* (2018.01)    *F21S 41/176* (2018.01)
*F21S 41/20* (2018.01)    *F21S 41/64* (2018.01)
*G02B 19/00* (2006.01)    *G02F 1/33* (2006.01)
*F21Y 115/10* (2016.01)

(86) Internationale Anmeldenummer:
**PCT/AT2016/050041**

(87) Internationale Veröffentlichungsnummer:
**WO 2016/164945 (20.10.2016 Gazette 2016/42)**

(54) **BELEUCHTUNGSVORRICHTUNG FÜR EIN KRAFTFAHRZEUG**

ILLUMINATION APPARATUS FOR A MOTOR VEHICLE

DISPOSITIF D'ÉCLAIRAGE POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2015   AT 503022015**

(43) Veröffentlichungstag der Anmeldung:
**21.02.2018   Patentblatt 2018/08**

(73) Patentinhaber: **ZKW Group GmbH**
**3250 Wieselburg (AT)**

(72) Erfinder:
• **REINPRECHT, Markus**
**3384 Pielachhäuser (AT)**

• **RIESENHUBER, Michael**
**3254 Bergland (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
**EP-A1- 3 133 336          WO-A1-2015/019537**
**WO-A2-2004/100624    US-A1- 2004 001 239**
**US-A1- 2005 276 053**

**Beschreibung**

Die Erfindung betrifft eine Beleuchtungsvorrichtung, insbesondere für ein Kraftfahrzeug, umfassend:

zumindest eine Laser-Lichtquelle zur Erzeugung von Anregungs-Licht;

zumindest ein Wellenlängen-Konversionselement, welches dazu eingerichtet ist, Anregungs-Licht von der zumindest einen Laser-Lichtquelle in Form eines Anregungs-Licht-Lichtbündels zu empfangen;

zumindest ein optisches Abbildungselement, welches von dem Wellenlängen-Konversionselement im sichtbaren Wellenlängenbereich emittiertes Licht in Form von zumindest einer Lichtverteilung bzw. einer Teil-Lichtverteilung abbildet; und

zumindest eine Strahlumlenkeinrichtung im Strahlengang zwischen der zumindest einen Laser-Lichtquelle und dem zumindest einen Wellenlängen-Konversionselement.

Weiters betrifft die Erfindung ein Beleuchtungssystem für einen Kraftfahrzeugscheinwerfer, welches Beleuchtungssystem zwei oder mehrere solche Beleuchtungsvorrichtungen umfasst. Außerdem betrifft die Erfindung einen Kraftfahrzeugscheinwerfer mit einer oder mehreren solchen/solcher Beleuchtungsvorrichtung(en) und/oder mit einem oder mehreren solchen/ solcher Beleuchtungssystem(e).

Schließlich betrifft die Erfindung noch ein Kraftfahrzeug mit einem oder zwei solchen Kraftfahrzeugscheinwerfer(n) .

Hierzu zeigt die EP 3 133 336 A1 eine ähnliche Beleuchtungsvorrichtung für einen Kraftfahrzeugscheinwerfer. Weiterhin wird aus WO 2015/019537 A1 eine gattungsgemäße Beleuchtungsvorrichtung bekannt.

Laserlichtquellen (z.B. Halbleiterlaser, Laserdioden) weisen eine Reihe von speziellen vorteilhaften Eigenschaften auf, wie z.B. hohe Strahlungsintensitäten und eine kleine lichtemittierende Fläche. Außerdem sind die ausgestrahlten Lichtbündel weitestgehend kollimiert. Im vorliegenden Zusammenhang wird unter einer Laserlichtquelle eine Lichtquelle verstanden, welche einen oder mehrere Halbleiterlaser und/oder eine oder mehrere Laserdioden umfasst, welcher/welche bzw. welche gemeinsam ein weitestgehend kollimiertes Lichtbündel ausstrahlen.

Daraus ergeben sich für die Verwendung von Laserlichtquellen zu Beleuchtungszwecken eine Reihe von Vorteilen, z.B. können optische Systeme, bei denen als Lichtquelle eine Laserlichtquelle zum Einsatz kommt, mit kleineren Brennweiten und stärker gebündelten Strahlverläufen realisiert werden. Mit weniger stark kollimierten Lichtbündeln (beispielsweise von Glühlampen oder Leuchtdioden (LEDs) mit einer Lambertschen Abstrahlungscharakteristik) ist dies nicht möglich. Es lassen sich somit bei Verwendung von Laserlichtquellen optische Systeme für Laserlicht mit geringem Bauraum realisieren.

Laser strahlen in der Regel monochromatisches Licht oder Licht in einem engen Wellenlängenbereich aus. Bei einem Kfz-Scheinwerfer ist allerdings für das abgestrahlte Licht weißes Mischlicht erwünscht oder gesetzlich vorgeschrieben, sodass sich Laserlichtquellen in einem Kfz-Scheinwerfer nicht ohne weiteres einsetzen lassen.

Zur Umwandlung von monochromatischem Licht in weißes oder polychromatisches Licht werden, insbesondere im Zusammenhang mit weißen Leuchtdioden (LEDs) oder Lumineszenzkonversions-LEDs, häufig sogenannte Konversionselemente (in diesem Text auch als Wellenlängen-Konversionselement bezeichnet) verwendet. Ein solches Konversionselement ist z.B. in Form eines Photolumineszenzkonverters oder Photolumineszenzelementes ausgebildet oder umfasst zumindest einen Photolumineszenzkonverter oder zumindest ein Photolumineszenzelement. Diese weisen in der Regel einen Photolumineszenzfarbstoff auf.

Das Licht einer üblicherweise monochromatisches (z.B. blaues) Licht (auch als "Anregungs-Licht" bezeichnet) ausstrahlenden Laserlichtquelle regt den Photolumineszenzfarbstoff zur Photolumineszenz an, worauf der Photolumineszenzfarbstoff selbst Licht anderer Wellenlängen (z.B. gelb) abgibt. Auf diese Weise kann ein Teil des eingestrahlten Lichts eines Wellenlängenbereichs in Licht eines anderen Wellenlängenbereichs umgewandelt werden. In der Regel wird ein weiterer Anteil des eingestrahlten Lichts (Anregungs-Lichts) von dem Photolumineszenzelement gestreut und/oder reflektiert. Das gestreute und/oder reflektierte Licht und das durch Photolumineszenz ausgestrahlte Licht überlagern sich dann additiv und führen z.B. zu weißem Mischlicht. Der Mechanismus der Photolumineszenz kann je nach Lebensdauer des angeregten Zustands in Fluoreszenz (kurze Lebensdauer) und Phosphoreszenz (lange Lebensdauer) unterschieden werden.

Bei den Konversionselementen wird zwischen reflektiven und transmissiven Konversionselementen unterschieden. Bei reflektiven Konversionselementen wird das von dem Konversionselemente umgewandelte Licht auf derselben Seite abgestrahlt, auf welcher das Anregungs-Licht auf das Konversionselement trifft. Bei transmissiven Konversionselementen wird das umgewandelte Licht von jener Seite, welche der Seite, auf welche das Anregungs-Licht auftrifft, abgewandt ist, abgestrahlt.

In klassischen Scheinwerfern erfordert eine Lichtschwerpunktverschiebung bzw. die Verschiebung einer Lichtverteilung bzw. einer Teillichtverteilung großen Einbauraum, da das gesamte Lichtmodul oder zumindest eine Linse mechanisch verschwenkt werden muss. Andere Lösungen, bei welchen eine Lichtverteilung mit einer Vielzahl von Lichtquellen erzeugt wird und bei welchen Lösungen ein Verschieben der Lichtverteilung durch Einschalten weiterer Lichtquellen und gegebenenfalls Abschalten anderer Lichtquellen erfolgt, verlangen den Einbau einer sehr großen Lichtleistung, von welcher für die Erzeugung der jeweils aktiven Lichtverteilung allerdings immer nur bestimmter Anteil genutzt werden kann.

Es ist eine Aufgabe der Erfindung, eine Lösung für eine Beleuchtungsvorrichtung, insbesondere für eine Beleuchtungsvorrichtung für ein Kraftfahrzeug, anzugeben, die einen geringen Bauraum benötigt und welche eine Lichtschwerpunktverschiebung bzw. die Verschiebung eines Teiles einer Lichtverteilung oder einer Gesamtlichtverteilung ermöglicht.

Diese Aufgabe wird mit einer eingangs genannten Beleuchtungsvorrichtung dadurch gelöst, dass erfindungsgemäß die zumindest eine Strahlumlenkeinrichtung als akusto-optischer Modulator ausgebildet ist, welcher ein zumindest für Anregungs-Licht der zumindest einen Laserlichtquelle optisch transparentes Festkörper-Medium umfasst, welches mit dem Anregungs-Licht-Lichtbündel durchstrahlt wird, und wobei Schallwellen mit einer Frequenz oder mehreren, insbesondere unterschiedlichen Frequenzen in dem Festkörper-Medium des akusto-optischen Modulator erzeugbar sind - beispielsweise mit einer Steuereinrichtung, welche den zumindest einen akusto-optischen Modulator vorzugsweise entsprechend vorgegebener oder vorgebbarer Steuerparameter ansteuert -, sodass das Anregungs-Licht-Lichtbündel in Abhängigkeit von der Frequenz der angelegten Schallwellen auf unterschiedliche Bereiche eines Konversionselement und/ oder auf unterschiedliche Konversionselemente abgelenkt wird, wobei die Frequenzen der Schallwellen in einem Bereich von 80 - 2500 MHz liegen.

Ein akusto-optischer Modulator umfasst ein durchsichtiges, d.h. optisch transparentes Festkörpermedium. Unter einem Festkörper werden dabei insbesondere Festkörper im eigentlichen Sinn, Glas und Kristalle verstanden. An dem Festkörper-Medium ist zur Erzeugung von Schallwellen in einem Bereich ein Piezoelement angebracht, gegenüberliegend befindet sich z.B. ein Schallabsorber, um Reflexionen und stehende Wellen zu vermeiden. Die Ablenkung von Lichts in einem solchen akusto-optischen Modulator funktioniert nach dem Prinzip der Beugung von Licht an einem optischen Gitter. Das optische Gitter besteht in den Dichteschwankungen einer den Kristall durchlaufenden Schallwelle.

Das Anregungs-Licht-Lichtbündel kann prinzipiell den akusto-optischen Modulator (im Folgenden auch als "AOM" bezeichnet) ohne Ablenkung durchstrahlen, das Lichtbündel trifft auf eine bestimmte Stelle des Konversionselementes oder auf ein bestimmtes Konversionselement, und entsprechend wird eine Lichtverteilung oder eine Teillichtverteilung an einer bestimmten Position vor dem Fahrzeug oder auf einem vertikalen Schirm in einem Abstand vor der Beleuchtungsvorrichtung erzeugt.

Durch Anlegen von Schallwellen einer geeigneten Frequenz kann das Anregungs-Licht-Lichtbündel bei seinem Weg durch den akusto-optischen Modulator abgelenkt werden und trifft auf eine andere Stelle des Konversionselementes bzw. auf ein anderes Konversionselement. Dementsprechend wird jener Licht emittierende Bereich, welcher schlussendlich für die Erzeugung der Lichtverteilung bzw. der Teillichtverteilung verantwortlich ist, in seiner Position verändert und entsprechend ändert sich auch die Position der Lichtverteilung bzw. der Teillichtverteilung vor dem Fahrzeug bzw. auf dem oben angesprochenen Bildschirm. Ist zur Erzeugung der Lichtverteilung bzw. der Teillichtverteilung genau ein abbildendes System, beispielsweise ein Reflektor oder eine Linse, insbesondere eine Projektionslinse vorgesehen, so ist in einer nicht abgelenkten Position, der beispielsweise als "Grundposition" bezeichneten Position, der Lichtfleck auf dem Konversionselement im Brennpunkt dieses abbildenden Systems, d.h. z.B. im Brennpunkt der Abbildungslinse oder des Reflektors. Durch Ablenkung des Laserstrahls befindet sich der Lichtfleck auf dem Konversionselement nicht mehr im Brennpunkt des abbildenden Systems. Neben der Position der Lichtverteilung im Lichtbild vor der Beleuchtungsvorrichtung ändert sich somit auch die Form der erzeugten Licht- bzw. Teillichtverteilung, was gezielt eingesetzt werden kann.

Die Verwendung eines akusto-optischen Modulators hat dabei weiters den Vorteil, dass keine mechanischen Teile verwendet werden müssen, wie dies etwa bei der Verwendung von beweglichen Spiegeln der Fall wäre. Bei einem akusto-optischen Modulator erfolgt die Strahlablenkung durch die Nutzung eines akusto-optischen Effektes, nämlich der Bragg-Streuung von elektromagnetischer Strahlung an Schallwellen in einem Medium. Lichtwellen werden an den induzierten Schallwellen gebeugt und verändern dadurch ihre Ausbreitungsrichtung. Um möglichst hohe Lasernutzungsraten zu erreichen, wird dabei vorzugsweise ausschließlich in erster Beugungsordnung gearbeitet.

Prinzipiell können mehrere Konversionselemente vorgesehen sein, in der Regel ist allerdings lediglich genau ein Konversionselement vorhanden. Die folgenden Überlegungen beziehen sich auf ein einziges Konversionselement, gelten aber sinngemäß auch für zwei oder mehrere Konversionselemente .

Das Konversionselement weist eine Fläche auf, welche mit dem fokussierten Laserlichtstrahl (Anregungslicht-Lichtstrahl) gezielt beleuchtet wird. Dieser Laserspot auf dem Konversionselement wird durch ein nachgeschaltetes Abbildungselement als Lichtverteilung, insbesondere als Teil einer Lichtverteilung vor der Beleuchtungsvorrichtung (bei in ein Fahrzeug eingebautem Zustand der Beleuchtungsvorrichtung vor dem Fahrzeug) abgebildet. Bei dem Abbildungselement handelt es sich beispielsweise, wie weiter unten noch näher ausgeführt, um einen Reflektor oder eine Abbildungslinse, es kann sich bei diesem Abbildungselement aber auch um ein Optiksystem handeln, welches zwei oder mehrere optische Komponenten, wie Linsen, Reflektoren, Blenden, etc. umfasst.

Durch Verändern der Position des Laserspots auf dem Konversionselement (auf der bestrahlten Fläche) kann nun die abgebildete Lichtverteilung gesteuert werden, d.h. insbesondere kann deren Position verändert werden. Trifft der Laserspot das Konversionselement z.B. im Fokalpunkt des Abbildungselementes, so wird ein zentraler Lichtspot abgebildet. Wird das Konversionselement außerhalb des Fokalpunktes beleuchtet, so wird ein weiter außen liegender Spot auf die Straße abgebildet. Wird dies nun gezielt ausgenutzt, kann z.B. eine Kurvenlichtfunktionen realisiert werden.

Als weitere Lichtfunktion kann ein gezieltes Anleuchten realisiert werden. Dazu wird der Laserstrahl gezielt so über das Konversionselement geführt, dass das abgebildete Lichtbild ein zu beleuchtendes Objekt gezielt verfolgen kann.

Von Vorteil kann es sein, wenn zwischen einem ersten akusto-optischen Modulator und dem zumindest einen Wellenlängen-Konversionselement ein zweiter akusto-optischer Modulator angeordnet ist, dessen Festkörper-Medium von dem aus dem ersten akusto-optischen Modulator austretenden Anregungs-Licht durchstrahlt wird, und wobei vorzugsweise der zweite und der erste akusto-optische Modulator derart zueinander angeordnet sind, dass die Ausbreitungsrichtung der Schallwellen in den beiden akusto-optischen Modulatoren orthogonal zueinander stehen.

Mit einer solchen Ausgestaltung können unterschiedlichen Verlagerungen der Lichtverteilung erzeugt werden. Beispielsweise ist realisierbar, dass der erste AOM den Laserstrahl horizontal verschiebt, und der zweite AOM eine vertikale Verschiebung erzeugt. Der erste AOM kann somit eine horizontale Verschiebung der erzeugten Lichtverteilung, etwa des erzeugten Spots als Teil einer Fernlichtverteilung horizontal verschieben und somit eine Kurvenlichtfunktion realisieren. Die mit dem zweiten AOM realisierbare vertikale Verschiebung kann für eine Leuchtweiten-Anpassung, insbesondere für eine dynamische Leuchtweite-Anpassung verwendet werden (z.B. LWR/Leuchtweitenregelung zum Ausgleich von z.B. Straßenverlauf, unterschiedliche Beladungszustände, etc.). Horizontale und vertikale Verschiebung (oder im Prinzip zwei beliebige Richtungen) können dabei auf einfache Weise gleichzeitig realisiert werden.

Es kann vorgesehen sein, dass die Frequenz der an dem zumindest einen akusto-optischen Modulator angelegten Schallwellen zeitlich variiert ist, beispielsweise indem die Steuereinrichtung dazu eingerichtet ist, die Frequenz der Schallwellen zeitlich zu variieren.

Um das erzeugte Lichtbild zu verschieben, wird eine fixe Frequenz an den AOM angelegt. Bleibt diese Frequenz unverändert, so bleibt der Lichtfleck auf dem Konversionselement und entsprechend das erzeugte Lichtbild so lange an der jeweils verschobenen Position, als die Frequenz unverändert bleibt. Um z.B. einen "wandernden" Lichtfleck auf dem Konversionselement und somit ein wanderndes Lichtbild zu erzeugen, wird die Frequenz entsprechend der gewünschten Position des Lichtbildes zeitlich variiert.

Ein bestimmter Ablenkwinkel für den Laserstrahl wird also durch eine zugeordnete Schallfrequenz umgesetzt. Sollen unterschiedliche Ablenkwinkel umgesetzt werden, z.B. wie oben beschrieben für einen wandernden Leuchtfleck/ein wanderndes (Teil-)Lichtbild, so ist die Schallfrequenz zu ändern.

Vorzugsweise sind die erzeugten Schallwellen ebene Wellen.

Mit Vorteil ist vorgesehen, dass der zumindest eine akusto-optische Modulator im Bragg-Regime betrieben wird.

Im Bragg-Regime (akustische Bragg-Beugung) erfolgt Beugung des einfallenden Strahls in eine Hauptrichtung (Einfallsrichtung = Ausfallsrichtung), die Wellenvektoren erfüllen die Impulserhaltungsbedingung unter der Bragg-Bedingung $\sin(\theta)$ = (Lichtwellenlänge)/(2*Schall-wellenlänge), und es tritt nur Beugung in erster Ordnung auf.

Wenn der AOM im Bragg-Regime betrieben wird, gilt Einfallwinkel = Ablenkwinkel. Dazu muss die sogenannte Bragg-Gleichung erfüllt sein. Um den Bragg-Winkel zu erreichen, ist somit eine bestimmte Frequenz (= Grundfrequenz) notwendig, mit der der AOM betrieben wird.

Für eine Laserwellenlänge von beispielsweise 450 nm (z.B. blaue Laserdiode auf InGaN-Basis) zur Anregung des Konversionselements und der Verwendung von beispielsweise Telluroxid $TeO_2$ als Festkörper-Medium des akusto-optischen Modulators ergeben sich Schallfrequenzen f für die Schallwellen im GHz-Bereich, um einen Bragg-Winkel von einigen Grad zu erreichen.

Es gelten folgende Zusammenhänge in obigem Beispiel: $sin\theta = \frac{\lambda}{2n} \frac{f0}{Vs}$, mit n = Brechungsindex (in diesem Beispiel gilt n = 2,26), $V_S$ = Schallgeschwindigkeit (4200 m/s), $\lambda$ = Vakuum-Wellenlänge des Lasers (450 nm), $f_0$ = Anregungsfrequenz [Hz] und $\theta$ = Bragg-Winkel [°]. Bei einem Bragg-Winkel von 1,0° ergibt sich somit unter den oben beschriebenen Bedingungen eine Frequenz von f = 736 MHz, damit der AOM im Bragg-Regime arbeitet.

Vorzugsweise wird zur Ablenkung des Anregungs-Licht-Lichtbündels aus einer Grundposition auf dem Konversionselement die dieser Grundposition entsprechende Grundfrequenz $f_0$ um einen Betrag von +$\Delta$f variiert.

Die Anregungsfrequenz der Schallwellen wird von $f_0$, bei welcher der einfallende Laserstrahl in die Grundbeugungsrichtung $\theta$ abgelenkt wird, auf $f_0$ + $\Delta$f erhöht, wodurch sich ein größerer Beugungswinkel $\theta$ + $\Delta\theta$ für den abgelenkten Laserstrahl ergibt.

Der Winkel $\theta$ ist dabei der Winkel zwischen dem einfallenden/ausfallenden Laserstrahl und der Normalenrichtung auf die Ausbreitungsrichtung der Schallwelle.

Die Frequenzänderung kann kontinuierlich oder in diskreten Schritten erfolgen.

Die Beugung erfolgt typischer Weise an ebenen Wellen. Der mögliche Winkelbereich, um welchen der gebeugte Lichtstrahl abgelenkt werden kann, ergibt sich zu $\Delta\theta = (\lambda/Vs) * B$. Für Laserlicht mit einer Vakuum-Wellenlänge von 450 nm ergibt sich somit $\Delta\theta = (450nm/ (n\ Vs) *B$, wobei n der Brechungsindex des transparenten Mediums des AOM für eine Wellenlänge von 450 nm ist.

Die maximale Bandbreite für die Änderung der Frequenz $B = \Delta f_{max}$ liegt vorzugsweise bei maximal $f_0/2$.

Von Vorteil kann es sein, wenn die Schallwelle, insbesondere die ebene Schallwelle einen Öffnungswinkel $\delta\theta_S$ aufweist, d.h. in Ausbreitungsrichtung auseinander läuft ("angular divergence"). Vorzugsweise gilt $\delta\theta_S \geq \Delta\theta$.

Von Vorteil kann es sein, wenn die Ausbreitungsrichtung der Schallwelle, insbesondere der ebenen Schallwelle, veränderbar ist. Insbesondere ist es von Vorteil, wenn die Ausbreitungsrichtung in Abhängigkeit von der Frequenz der Schallwellen oder der Änderung der Frequenz der Schallwellen veränderbar ist. Die Ausbreitungsrichtung wird dabei derart geändert, dass sich der Winkel zwischen dem einfallenden Laserstrahl und der Ausbreitungsrichtung der Schallwelle ändert. Dadurch kann sichergestellt werden, dass auch bei einer Änderung der Frequenz der Schallwellen der AOM nach wie vor im Bragg-Regime arbeitet.

Die Änderung der Richtung der Schallwelle kann beispielsweise durch die Verwendung von zwei oder mehreren Schallgebern erfolgen, welche z.B. mit unterschiedlicher Phasenlage betrieben werden.

Die Änderung der Richtung der Schallwelle kann alternativ oder zusätzlich beispielsweise dadurch erfolgen, dass der AOM, d.h. insbesondere das optische transparente Material und der zumindest eine Schallgeber drehbar angeordnet sind.

Von Vorteil kann es sein, wenn genau ein optisches Abbildungselement oder für jedes Konversionselement genau ein optisches Abbildungselement vorgesehen ist.

Es kann auch vorgesehen sein, dass für jeden Bereich eines Konversionselement, in welchen Anregungs-Licht ablenkbar ist, genau ein optisches Abbildungselement vorgesehen ist. Bei dieser Ausgestaltung kann mehreren beleuchteten Bereichen auf dem Konversionselement so zugeordnet werden, dass ein Brennpunkt des Abbildungselementes je in einem beleuchteten Bereich liegt.

Die unterschiedliche Abbildungselemente können dabei getrennt ausgebildet sein, können aber auch als ein Bauteil ausgebildet sein, beispielsweise können die Abbildungselemente als verschiedene, beispielsweise horizontale, Segmente eines gemeinsamen Reflektors, wobei jedes Segment des Reflektors auf einen unterschiedlichen Bereich auf dem Konversionselement fokussiert ist (d.h., dass der Brennpunkt des jeweiligen Segmentes in einem zugeordneten Bereich liegt) oder so ausgebildet ist, dass hauptsächlich Licht aus einem bestimmten Bereich auf ein jeweils zugeordnetes Segment des Reflektors gelangt, ausgebildet sein.

Es kann vorgesehen sein, dass ein oder mehrere oder alle optische Abbildungselement(e) jeweils als Reflektor bzw. als Reflektoren ausgebildet sind.

Beispielsweise weisen diese Reflektoren eine parabelförmige Grundform auf, die reflektierende Fläche kann zusätzlich segmentiert sein.

Alternativ oder in einer gemischten Ausführungsform, bei welcher auch ein oder mehrere Reflektoren vorgesehen ist/ sind, sind ein oder mehrere optische Abbildungselement(e) jeweils als Linse ausgebildet bzw. jeweils aus Linsen gebildet. Es können auch alle Abbildungselement jeweils als Linse ausgebildet oder jeweils aus Linsen gebildet sein.

Eine solche Linse oder ein solches System aus Linsen bestehend aus zwei oder mehreren Linsen weist jeweils vorzugsweise in Summe eine sammelnde Wirkung auf.

Üblicherweise weist das Konversionselement eine ebene Fläche auf, auf welche Laserlicht auftrifft. In einem solchen Fall trifft ein Laserstrahl, welcher in der Grundbeugungsrichtung (entsprechend der Frequenz $f_0$) gebeugt wird, unter einem Winkel von z.B. 90° auf dem Konversionselement auf. Ein aus der Grundbeugungsrichtung erfindungsgemäß abgelenkter Strahl hingegen trifft unter einem anderen Winkel, in diesem Beispiel also unter einem Winkel ungleich 90°, an einer anderen Stelle auf dem Konversionselement auf. Dementsprechend ändert sich nicht nur die Position des Lichtflecks auf dem Konversionselement, sondern auch die Form, was prinzipiell gewünscht sein kann, aber auch zu einem unerwünschten, "verwaschenen" Lichtbild führen kann.

Mit Vorteil kann vorgesehen sein, dass zwischen dem zumindest einen Konversionselement und dem zumindest einen akusto-optischen Modulator eine optische Umlenkeinrichtung angeordnet ist, welche aus dem zumindest einen akusto-optischen Modulator bzw. jenem akusto-optischen Modulator, welcher dem Konversionselement am nächsten liegt, austretendes Anregungs-Licht parallel zur einer Grundbeugungsrichtung bzw. normal zu einer Applikationsebene des Konversionselementes, auf welche das Anregungs-Licht auftrifft, umlenkt.

Beispielsweise umfasst die Umlenkeinrichtung eine Linsenanordnung für ein telezentrisches Objektiv bzw. besteht aus einer solchen.

Alternativ oder zusätzlich kann vorgesehen sein, dass zwischen dem zumindest einen Konversionselement und dem zumindest einen akusto-optischen Modulator eine optische Umlenkeinrichtung angeordnet ist, welche aus dem zumindest einen akusto-optischen Modulator bzw. jenem akusto-optischen Modulator, welcher dem Konversionselement am nächsten liegt, austretendes Anregungs-Licht derart ablenkt, dass unabhängig vom Ablenkwinkel auf einem planen Konversionselement gleich große Laserlicht-Spots erzeugt werden.

Beispielsweis umfasst die Umlenkeinrichtung eine F-Theta-Linse oder eine F-Theta-Linsenanordnung oder eine Linsenanordnung, welche zumindest eine F-Theta Linse umfasst besteht daraus.

Vorzugsweise ist die Beleuchtungsvorrichtung in ein Kraftfahrzeug eingebaut, und die Steuerparameter zu einem definierten Zeitpunkt hängen von einem Zustand des Kraftfahrzeuges zu diesem definierten Zeitpunkt bzw. von einem Zustand des Kraftfahrzeuges in einem Zeitintervall um diesen definierten Zeitpunkt ab.

Der Zustand des Kraftfahrzeuges kann beschrieben werden bzw. sich ergeben z.B. Lenkeinschlag und/oder Geschwindigkeit und/oder Beschleunigung des Fahrzeuges und/oder Positions-Daten aus einem Navigationsgerät des Fahrzeuges und/oder Kameradaten der Fahrzeugumgebung (beispielsweise Art und Ort anderer Verkehrsteilnehmer) und/oder Straßenzustand und/oder Straßenverlauf (Kurven) bzw. (Kuppen / Senken), etc.

Vorzugsweise ist die erzeugte Lichtverteilung oder Teillichtverteilung in horizontaler und/ oder vertikaler Richtung verschiebbar, insbesondere betrachtet auf einem vertikalen Schirm in einer definierten Entfernung, z.B. 10 oder 25 Meter, vor der Beleuchtungsvorrichtung.

Beispielsweise ist vorgesehen, dass die erzeugte Teillichtverteilung einen Teil einer Fernlichtverteilung, insbesondere einen, vorzugsweise zentralen, Maximum-Spot der Fernlichtverteilung, bildet.

Bei einem erfindungsgemäßen Beleuchtungssystem, welches zwei oder mehrere oben beschriebene Beleuchtungsvorrichtungen aufweist, kann vorgesehen sein, dass jede der Beleuchtungsvorrichtungen eine Teillichtverteilung bildet, welche Teillichtverteilungen beispielsweise nebeneinander und/oder übereinander, aneinander angrenzend und/oder benachbarte Teillichtverteilung einander teilweise überlappend, angeordnet sind.

Vorzugsweise liegen die Beleuchtungsvorrichtungen in Art einer Matrix nebeneinander und gegebenenfalls in Reihen übereinander (entweder unmittelbar aneinander angrenzend oder mit Abstand zueinander) und erzeugen nebeneinander liegende streifenförmige Teillichtverteilungen. Beispielsweise weisen die Beleuchtungsvorrichtungen als Abbildungselemente Reflektoren auf. Durch Verschieben der auf den Konversionselementen mit den einzelnen Laserstrahlen ausgeleuchteten Bereichen, können die Teillichtverteilungen verschoben werden und auf diese Weise Kurvenlicht umgesetzt werden. Das Verschieben erfolgt dazu vorzugsweise schnell mit einer hohen Bildwiederholungsrate von beispielsweise ca. 100 Hz -10 kHz (abhängig von der jeweiligen Anwendung), vorzugsweise mit 200 Hz - 1 kHz.

Die Bildwiederholungsrate ist jene Rate, mit die einzelnen Teillichtverteilungen der Reihe in rascher Abfolge kurzfristig aktiviert werden. Durch eine ausreichend große Rate entsteht der Eindruck einer Gesamtlichtverteilung. Die Bildwiederholungsrate ist somit jene Rate bzw. gibt jene Frequenz an, mit welcher die Frequenz zur Erzeugung der Schallwellen in einem AOM geändert wird.

Diese Wiederholungsrate ist für die Überlagerung der Teillichtverteilungen zu einem Gesamtbildaufbau, z.B. in einem Matrix-Lite werden in kurzer Abfolge einzelne Teillichtverteilungen aktiviert und der Fahrer hat den Eindruck einer Gesamt-Fernlichtverteilung. Da die AOM schnell betrieben werden können, lassen sich Bildwiederholungsraten im Kilohertz-Bereich realisieren.

Eine Kurvenlichtfunktion entsteht durch Verschieben des Beleuchtungsschwerpunktes, indem nebeneinanderliegende "Brennpunkte" genutzt werden. Für eine Kurvenlichtfunktionalität ist somit hingegen eine hohe Bildwiederholungsrate nicht notwendig.

Als weitere Lichtfunktion wäre auch denkbar, ein gezieltes Anleuchten zu realisieren. Dabei müsste der Laserstrahl so über den Phosphor geführt werden, dass das abgebildete Lichtbild ein zu beleuchtendes Objekt gezielt verfolgen kann. Für weitere Lichtfunktionen muss natürlich jeweils eine spezielle Optik ausgelegt werden, um das optimale Ergebnis zu erreichen. Beispielsweise wäre für ein gezieltes Anleuchten ein eher schmales aber vertikal hohes Leuchtband von Vorteil. Die genaue Auslegung dieser Optik ist jedoch nicht Teil der Erfindung.

Im Folgenden ist die Erfindung an Hand der Zeichnung näher erörtert. In dieser zeigt

Fig. 1 eine rein schematische Darstellung einer ersten erfindungsgemäßen Beleuchtungsvorrichtung,

Fig. 2 eine rein schematische Darstellung einer zweiten erfindungsgemäßen Beleuchtungsvorrichtung,

Fig. 3 eine rein schematische Darstellung einer dritten erfindungsgemäßen Beleuchtungsvorrichtung,

Fig. 4 eine rein schematische Darstellung einer vierten erfindungsgemäßen Beleuchtungsvorrichtung,

Fig. 5 schematisch eine Verschiebung einer Teillichtverteilung mit einer Beleuchtungsvorrichtung gemäß der vorliegenden Erfindung,

Fig. 6 einen schematischen Aufbau eines AOM mit schematisch angedeuteter ebener Schallwelle,

Fig. 7 einen Aufbau wie in Figur 6 mit einer ebenen Schallwelle, welche einen Öffnungswinkel aufweist,

Fig. 8 einen schematischen Aufbau einer erfindungsgemäßen Anordnung zur vertikalen und horizontalen Ablenkung einer Lichtverteilung bzw. Teillichtverteilung,

Fig. 9a eine schematische Anordnung zur Erzeugung eines linken Teiles einer Lichtverteilung,

Fig. 9b eine schematische Anordnung zur Erzeugung des rechten Teiles der Lichtverteilung,

Fig. 9c die sich aus Überlagerung der Teil-Lichtverteilungen aus Figur 9a und 9b ergebenden Lichtverteilung,

Fig. 10a eine Anordnung zum gezielten Bereichen vor einem Kraftfahrzeug,

Fig. 10b eine entsprechende Lichtverteilung, und

Fig. 11 eine bekannte Anordnung nach dem Stand der Technik.

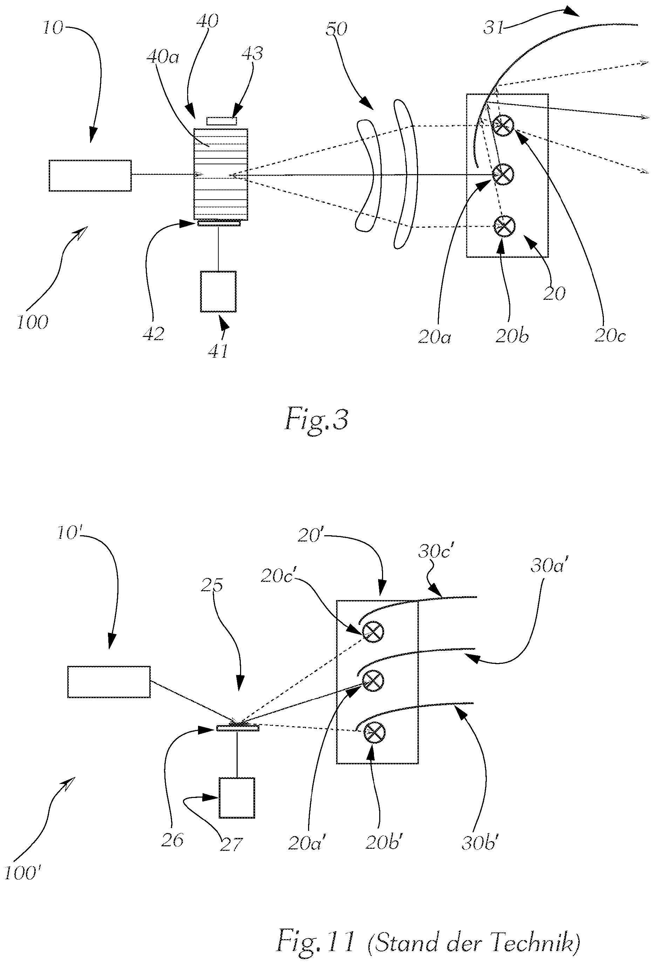

Figur 11 zeigt eine Beleuchtungsvorrichtung 100' für ein Kraftfahrzeug gemäß dem Stand der Technik. Diese Beleuchtungsvorrichtung 100' umfasst eine Laser-Lichtquelle 10' zur Erzeugung von Anregungs-Licht (Laserlicht), ein Wellenlängen-Konversionselement 20', welches dazu eingerichtet ist, Anregungs-Licht von der Laser-Lichtquelle 10' in Form eines Anregungs-Licht-Lichtbündels zu empfangen, sowie in dem gezeigten Beispiel drei optische Abbildungselement 30a', 30b', 30c' in Form von Reflektoren, welche dem Konversionselement 20' zugeordnet sind. Die Reflektoren 30a' - 30c' bilden Licht, welches von dem Wellenlängen-Konversionselement 20' im sichtbaren Wellenlängenbereich emittiert wird, in Form einer Lichtverteilung bzw. einer Teil-Lichtverteilung in einem Bereich vor der Beleuchtungsvorrichtung bzw. einem Kraftfahrzeug, in welches die Beleuchtungsvorrichtung eingebaut ist, ab.

Wie in Fig. 11 zu erkennen ist, ist ein Umlenkelement 26 in Form eines Umlenkspiegels vorgesehen. Einfallendes Laserlicht wird von dem Spiegel 26 in einen Bereich 20a' des Konversionselementes 20' abgelenkt, welcher Bereich 20a' Licht im sichtbaren Wellenlängenbereich emittiert, und welches von dem Reflektor 30a' wie oben beschrieben als Lichtverteilung abgebildet wird.

Der Spiegel 26 ist in seiner Ausrichtung mit einem Aktuator 27 verstellbar, beispielsweise ist der Spiegel 26 um eine nicht gezeigte Achse, die z.B. normal auf die Zeichenebene steht, verschwenkbar. Dadurch kann der einfallende Lichtstrahl auf einen anderen Bereich auf dem Konversionselement 20c', z.B. den Bereich 20b' oder 20c' abgelenkt werden. Das aus diesen Bereichen emittierte sichtbare Licht wird von den Reflektoren 30b' bzw. 30c' als Lichtverteilung abgebildet, wobei diese Lichtverteilungen im Lichtbild vor dem Kraftfahrzeug an anderen Stellen liegen als die Lichtverteilung, welche mit dem Reflektor 20a' erzeugt wird.

Nachteilig an einer solchen bekannten Anordnung ist, dass für eine Beleuchtung von unterschiedlichen Bereichen auf dem Konversionselement 20' bewegliche Teile, wie ein beweglicher Spiegel notwendig sind.

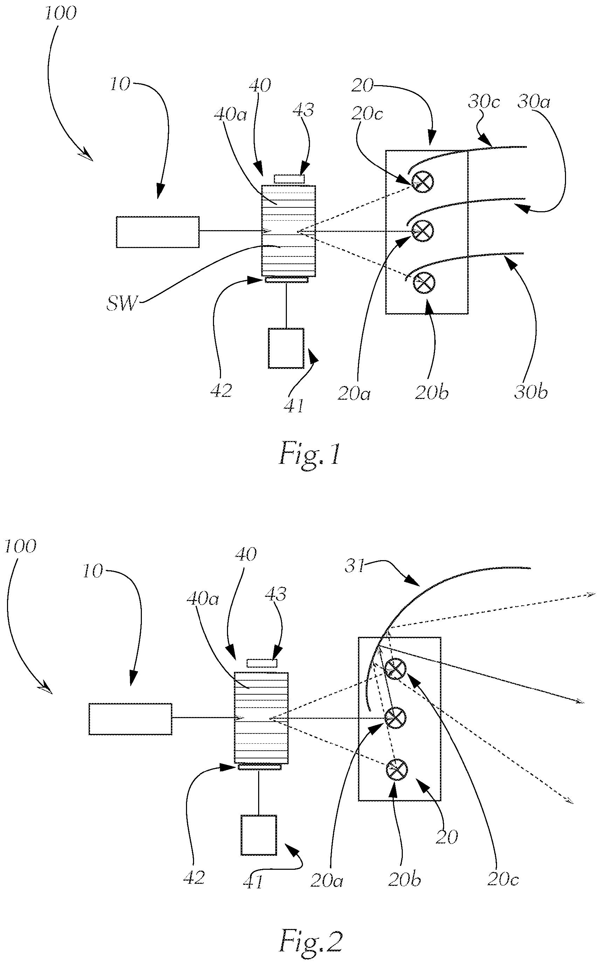

Gemäß einer erfindungsgemäßen Beleuchtungsvorrichtung 100 wie in Figur 1 gezeigt ist deshalb vorgesehen, dass die Ablenkung des Laserstrahls durch einen akusto-optischem Modulator (AOM) 40 erfolgt. Konkret zeigt die schematische Darstellung aus Figur 1 eine Beleuchtungsvorrichtung 100 für ein Kraftfahrzeug, welche eine Laser-Lichtquelle 10 zur Erzeugung und Ausstrahlung von Anregungs-Licht (Laserlicht) umfasst, weiters umfasst die Beleuchtungsvorrichtung 100 ein Wellenlängen-Konversionselement 20, welches dazu eingerichtet ist, Anregungs-Licht von der Laser-Lichtquelle 10 in Form eines Anregungs-Licht-Lichtbündels zu empfangen, sowie in dem gezeigten Beispiel drei optische Abbildungselement 30a, 30b, 30c in Form von Reflektoren, welche dem Konversionselement 20, d.h. unterschiedlichen Bereichen 20a, 20b, 20c des Konversionselementes 20 zugeordnet sind. Vorzugsweise liegt der oder ein Brennpunkt eines Reflektors 30a, 30b, 30c jeweils in dem zugeordneten Bereich 20a, 20b, 20c des Konversionselementes 20.

Die Reflektoren 30a - 30c bilden Licht, welches von dem Wellenlängen-Konversionselement 20 im sichtbaren Wellenlängenbereich in den Bereichen 20a, 20b, 20c emittiert wird, in Form einer Lichtverteilung bzw. einer Teil-Lichtverteilung in einem Bereich vor der Beleuchtungsvorrichtung 100 bzw. einem Kraftfahrzeug, in welches die Beleuchtungsvorrichtung 100 eingebaut ist, ab.

Zwischen der Laserlichtquelle 10 und dem Konversionselement 20 ist erfindungsgemäß ein AOM 40 vorgesehen. Der AOM 40 umfasst dabei ein zumindest für das Anregungs-Licht der Laserlichtquelle 10 optisch transparentes Festkörper-Medium 40a. Dieses Festkörper-Medium 40a ist z.B. in einem Grundkörper angeordnet oder bildet einen solchen Grundkörper 40a.

An einem Rand des Grundkörpers 40a ist ein akustischer, insbesondere ein Ultraschall-basierter, Aktuator 42 angebracht, der eine akustische Welle (Schallwelle) SW zu einem auf einer gegenüberliegenden Seite des Grundkörpers 40a angebrachten Absorber 43 senden kann.

Es ist eine Steuereinrichtung 41 vorgesehen, mittels welcher der AOM 40 entsprechend vorgegebener oder vorgebbarer Steuerparameter ansteuern kann, insbesondere steuert die Steuereinrichtung 41 dabei den Aktuator 42 an, sodass Schallwellen mit einer Frequenz, insbesondere mit mehreren, insbesondere unterschiedlichen Frequenzen in dem Festkörper-Medium 40a des akusto-optischen Modulator 40 erzeugt werden können. Das bedeutet, dass die Frequenz der Schallwellen, die in dem AOM 40, d.h. in dem optisch transparenten Festkörpermedium 40a des AOM 40, erzeugt werden, variabel, insbesondere zeitlich variabel ist.

Die akustische Welle SW erzeugt unterschiedliche optische Dichten innerhalb des Grundkörpers 40a, so dass der AOM 40 in der Lage ist, den Strahlengang des einfallenden Laserstrahls auszulenken, da der Strahlengang durch das entstehende optische Gitter gebeugt werden kann. Durch das Festlegen von unterschiedlichen Frequenzen der akustischen Welle SW ist es möglich, unterschiedliche Ablenk- bzw. Beugungswinkel zu erzeugen, sodass je nach angelegter Frequenz der durch den AOM 40 abgelenkte, gebeugte Laserstrahl in unterschiedlichen Bereichen 20a, 20b, 20c auf dem Konversionselement 20 auftrifft. Dabei ist vorgesehen, dass der Ablenkwinkel $\theta$ von der Steuervorrichtung 41, vorzugsweise an Hand der oben angesprochenen Parameter, bestimmt werden kann.

Die Laserlichtquelle 10 emittiert im eingeschalteten Zustand bevorzugt kontinuierlich einen Laserstrahl, der vorzugsweise hinsichtlich der gewünschten Intensität regelbar ist. Es kann aber auch vorgesehen sein, dass Laserlicht gepulst ausgestrahlt wird. In diesem letzteren Fall ist bevorzugt vorgesehen, dass die Steuervorrichtung 41 weiterhin dafür sorgt, dass stets ein vollständiger Lichtpuls der Lichtquelle 10 abgelenkt wird, Lichtquelle 10 und AOM 40 werden in diesem Fall somit bevorzugt synchronisiert betrieben. Dabei kann vorgesehen sein, dass während der Zeit, in der eine Schallwelle bestimmter Frequenz erzeugt wird, genau ein Laserlichtpuls durch den AOM gesendet wird, es kann aber auch vorgesehen sein, dass mehrere Laserlichtpulse in diesem Zeitraum konstanter Frequenz durch den AOM gesendet werden.

Figur 1 zeigt drei unterschiedliche Ablenkwinkel für den gebeugten Laserstrahl, entsprechend drei unterschiedlichen Frequenzen für die Schallwellen in dem AOM 40, entsprechend werden unterschiedliche Bereiche 20a, 20b, 20c des Konversionselementes 40 mit dem Laserstrahl beleuchtet, aus welchen Bereichen dann Mischlicht wie eingangs beschrieben abgestrahlt und von dem jeweils zugehörigen Reflektor 30a, 30b, 30c abgebildet wird.

Figur 2 zeigt einen zu Figur 1 vergleichbaren Aufbau, mit dem Unterschied, dass das Abbildungsmittel hier in Form eines einzigen Reflektors 31 vorgesehen ist. Bei dieser Anordnung liegt der Brennpunkt des Reflektors 31 z.B. in dem Bereich 20a des Konversionselementes 20, Licht, welches aus dem Bereich 20a austritt, wird entsprechend fokussiert von dem Reflektor 31 abgebildet. Licht aus den Bereichen 20b, 20c, welche sich nicht im Brennpunkt des Reflektors 31 befinden, werden entsprechend defokussiert abgebildet. Eine mit dem Bereich 20a erzeugte Licht- bzw. Teillichtverteilung wird entsprechend scharf abgebildet, während eine Licht- bzw. Teillichtverteilung, erzeugt mit den Bereichen 20b, 20c unscharf abgebildet wird.

Bei einer Ausgestaltung gemäß Figur 1 werden die Licht- bzw. Teillichtverteilung aus den drei gezeigten Bereichen 20a - 20c scharf abgebildet.

Je nach gewünschtem Effekt kann zwischen den Anordnungen gemäß Figur 1 (natürlich auch mit einer anderen Anzahl aus Lichtflecken und Reflektoren als in Figur 1 gezeigt, z.B. 2 Reflektoren aber auch 4 oder mehreren Reflektoren) und Figur 2 gewählt werden, auch Mischformen sind möglich, bei denen ein oder mehrere Bereiche auf dem Konversionselement eigene Reflektoren aufweisen, während andere Bereiche gemeinsamen über eigenen Reflektor verfügen.

Figur 3 zeigt eine Abwandlung der Beleuchtungsvorrichtung 100 aus Figur 2, wobei dieses Modifikationen genauso bei einer Anordnung aus Figur 1 oder Mischformen wie oben beschrieben vorgesehen werden kann. Als Modifikation ist vorgesehen, dass zwischen dem Konversionselement 20 und dem akusto-optischen Modulator 40 eine optische Umlenkeinrichtung 50 angeordnet ist, welche aus dem akusto-optischen Modulator 40 austretendes Anregungs-Licht parallel zur der Grundbeugungsrichtung bzw. normal zu einer Applikationsebene des Konversionselementes (20), auf welche das Anregungs-Licht auftrifft, umlenkt.

Beispielsweise umfasst die Umlenkeinrichtung 50 eine F-Theta-Linse oder eine F-Theta-Linsenanordnung oder eine Linsenanordnung, welche zumindest eine F-Theta Linse umfasst bzw. aus zumindest einer solchen besteht.

Eine solche F-Theta Optik ist so ausgeformt bzw. kann so ausgeformt werden, dass der Laserstrahl unabhängig vom Ausmaß der Ablenkung auf dem (bzw. im) planen Konversionselement eine gleich große Anregungsfläche(-volumen) einnimmt, unabhängig vom Ablenkwinkel durch den AOM. Somit bleibt das Erscheinungsbild (Größe, Form) der erzeugten (Teil-)Lichtverteilung auch bei einem Verschieben im Wesentlichen unverändert.

Üblicherweise ist das Konversionselement 40 wie gezeigt als ebene Fläche ausgebildet bzw. weist eine ebene Fläche (Applikationsebene) auf, auf welcher das Laserlicht auftrifft. In einem solchen Fall trifft ein Laserstrahl, welcher in der Grundbeugungsrichtung (entsprechend der Frequenz $f_0$) gebeugt wird, unter einem Winkel von z.B. 90° auf dem Konversionselement auf. Dieses Fall wird durch eine alternative oder zusätzliche Optik - z.B. ein telezentrisches Objektiv - umgesetzt, die das Konversionselement in einen telezentrischen Strahlengang setzt. Ein aus der Grundbeugungsrichtung erfindungsgemäß abgelenkter Strahl hingegen trifft unter einem anderen Winkel, in diesem Beispiel also unter einem Winkel ungleich 90°, an einer anderen Stelle auf dem Konversionselement. Dementsprechend ändert sich nicht nur die Position des Lichtflecks auf dem Konversionselement, sondern auch die Form, was prinzipiell zwar gewünscht sein kann, aber auch zu einem unerwünschten, "verwaschenen" Lichtbild führen kann.

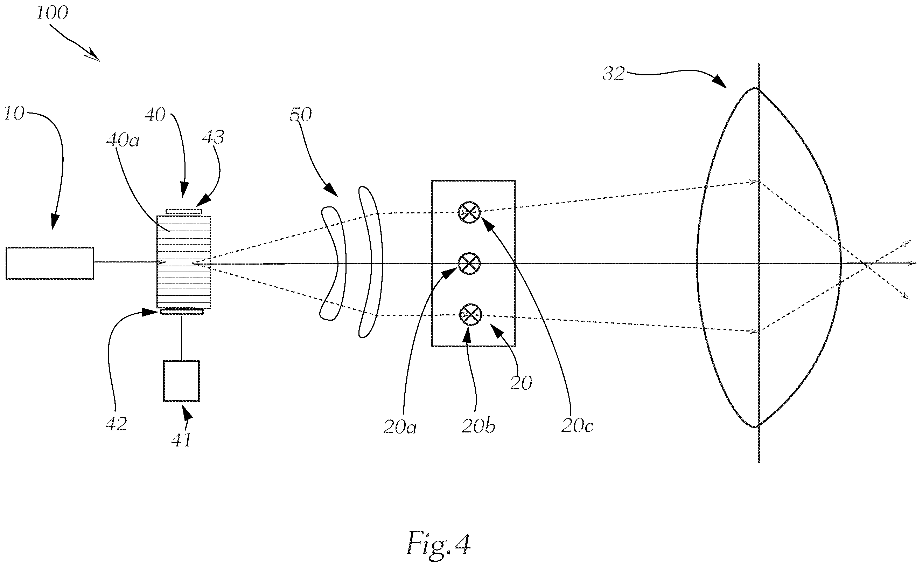

Figur 4 zeigt noch eine weitere Ausführungsform, bei der als optisches Abbildungselement beispielhaft eine Linse 32 vorgesehen ist, welche vorzugsweise eine sammelnde Wirkung aufweist. Figur 4 zeigt weiters in bevorzugter Weise eine optische Umlenkeinrichtung 50 wie an Hand von Figur 3 beschrieben, diese Umlenkeinrichtung 50 ist optional.

Der Brennpunkt der Linse 32 liegt in einem der Bereiche 20a - 20c, z.B. im Bereich 20a. Alternativ kann vorgesehen sein, dass für jeden Bereich eine eigene, vorzugsweise Licht sammelnde, Linse vorgesehen ist. Auch Mischformen wie bereits an Hand von Reflektoren weiter oben beschrieben ist auch bei Ausführungsformen mit Linsen möglich.

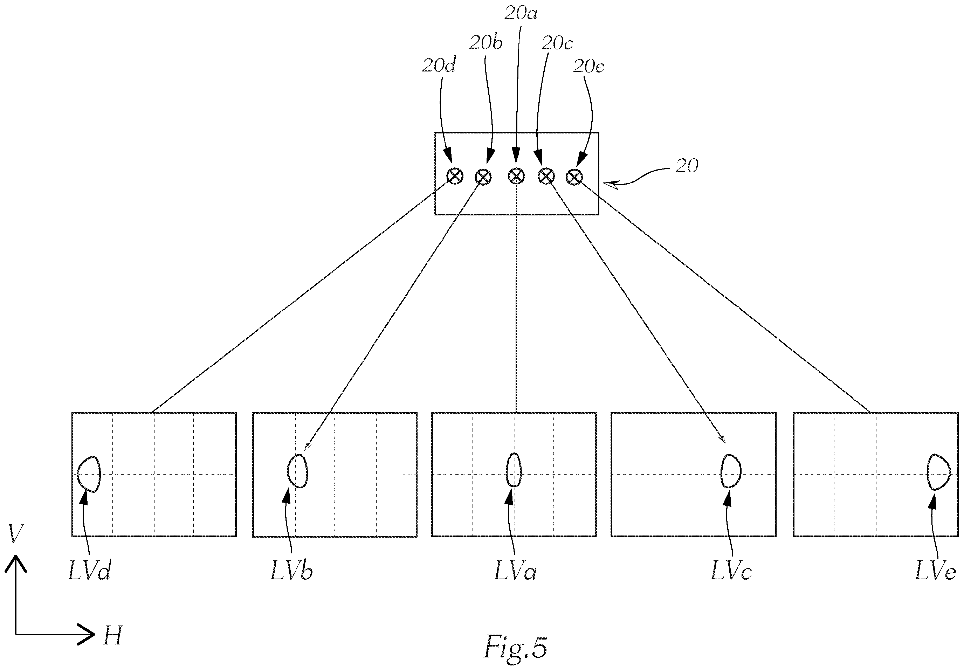

Figur 5 zeigt rein schematisch ein horizontales Verschieben einer Teillichtverteilung eines Lichtbildes gemäß der Erfindung. Das Konversionselement 20 wird je nach angelegter Frequenz an einen nicht dargestellten AOM in einem der Bereiche 20a - 20e mit Laserlicht bestrahlt, aus dem jeweiligen Bereich 20a - 20e austretendes Licht wird über ein Abbildungselement wie oben beschrieben in einen Bereich vor der Beleuchtungsvorrichtung abgebildet. Dabei liegt je nach Bereich 20a - 20e auf dem Konversionselement die damit erzeugte (Teil-)Lichtverteilung LVa - LVe an einer anderen Stelle im Lichtbild, wobei in dem gezeigten Beispiel die (Teil-)Lichtverteilung in horizontaler Richtung verschoben wird.

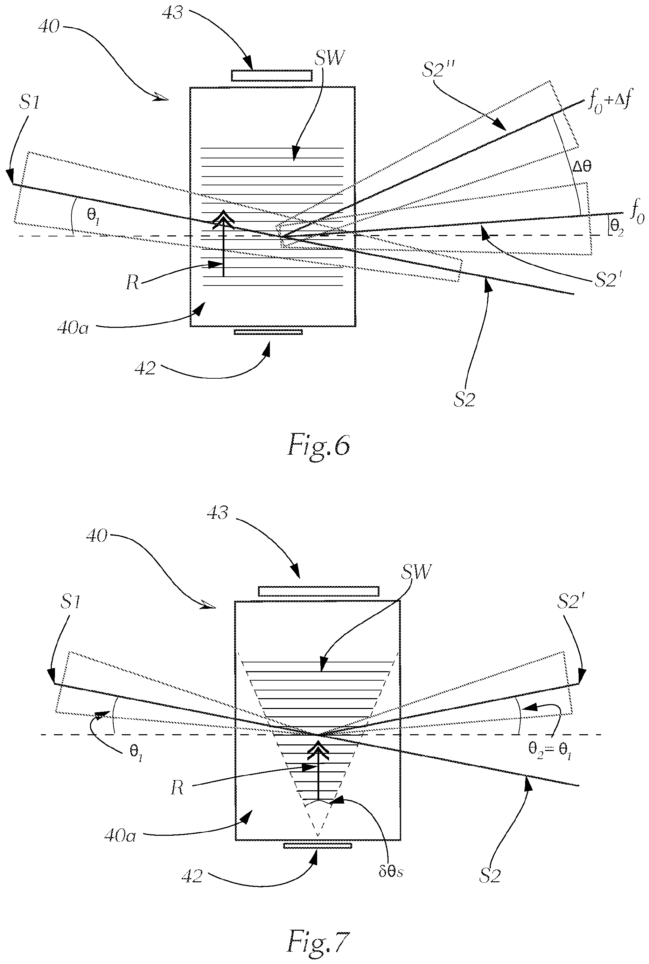

Figur 6 zeigt einen AOM 40 in einer vergrößerten Darstellung. In dem AOM 40 wird wie beschrieben eine Schallwelle SW durch Anlegen einer Frequenz $f_0$ erzeugt, bei der Schallwelle SW handelt es sich vorzugsweise um eine ebene Welle SW mit einer Ausbreitungsrichtung R. Ein Laserstrahl S1 trifft unter einem Winkel $\theta_1$ auf den AOM 40, wobei die Winkel normal zur Ausbreitungsrichtung R der Schallwelle SW gemessen werden.

Nachdem der AOM 40 aus einem optisch transparenten Medium 40a besteht, würde ohne angelegte Schallwellen der Laserstrahl ohne Ablenkung geradlinig den AOM durchdringen und als Laserstrahl S2 aus dem AOM 40 wieder austreten.

Durch Anlegen einer Frequenz kommt es nun zu einer Ablenkung des Laserstrahls S1, dieser tritt als Laserstrahl S2' aus dem AOM 40 wieder aus. Der Laserstrahl S2' ist dabei um einen Winkel $\theta_2$ abgelenkt.

Wie weiter oben bereits beschrieben, ist es von Vorteil, wenn der AOM 40 im Bragg-Regime arbeitet, sodass gilt $\theta_1 = \theta_2 = \theta$, wobei $\theta$ der sogenannte Bragg-Winkel ist, welcher die weiter oben bereits ausführlich erläuterte $\sin(\theta)$-Bedingung erfüllen muss.

Damit die Bragg-Bedingung erfüllt ist, wird der AOM 40 mit einer sogenannten "Grundfrequenz" $f_0$ betrieben, bei welcher der Einfallswinkel = Ablenkwinkel = $\theta$ gilt.

Es gelten folgende Zusammenhänge in obigem Beispiel: $sin\theta = \frac{\lambda 0}{2n} f_0/Vs$, mit n = Brechungsindex (in diesem Beispiel gilt n = 2,26), Vs = Schallgeschwindigkeit (4200 m/s) entlang einer bestimmten Kristallorientierung, $\lambda_0$ = Vakuum-Wellenlänge des Lasers (450 nm), $f_0$ = Anregungsfrequenz [Hz] und $\theta$ = Bragg-Winkel [°]. Für einen Bragg-Winkel von 1,0° ist somit unter dem oben beschriebenen Material-Bedingungen eine Frequenz von f = 736 MHz notwendig, wenn der AOM im Bragg-Regime arbeitet.

Zur Ablenkung des Anregungs-Licht-Lichtbündels aus einer Grundposition auf dem Konversionselement wird die dieser Grundposition entsprechende Grundfrequenz $f_0$ um einen Betrag von $+\Delta f$ variiert.

Die Anregungsfrequenz der Schallwellen wird von $f_0$, bei welcher der einfallende Laserstrahl S1 in die Grundbeugungsrichtung $\theta$ abgelenkt wird (S2'), auf $f_0 + \Delta f$ erhöht, wodurch sich ein größerer Beugungswinkel $\theta + \Delta\theta$ für den abgelenkten Laserstrahl S2" ergibt.

Der Winkel $\theta$ ist dabei der Winkel zwischen dem einfallenden/ausfallenden Laserstrahl und der Normalenrichtung auf die Ausbreitungsrichtung der Schallwelle.

Die Frequenzänderung kann kontinuierlich oder in diskreten Schritten erfolgen.

Der maximal mögliche Winkelbereich, um welchen der gebeugte Lichtstrahl S2' in eine Richtung abgelenkt werden kann, ergibt sich zu $\Delta\theta = (\lambda/Vs) * B$. Für Laserlicht mit einer Vakuum-Wellenlänge von $\lambda_0 = 450$ nm ergibt sich somit $\Delta\theta = (450nm/ (n\, Vs) * B$, wobei n der Brechungsindex des transparenten Mediums des AOM für eine Wellenlänge von 450 nm ist.

Somit reicht der maximale Ablenkbereich von $\theta$ bis $\theta + \Delta\theta$ für Frequenzen von $f_0 + B$.

$$\text{Die Bandbreite } B = \Delta f_{max} \text{ liegt vorzugsweise bei maximal } f_0/2.$$

Wie Figur 7 zeigt, kann es von Vorteil sein, wenn die Schallwelle, insbesondere die ebene Schallwelle SW einen Öffnungswinkel δθs aufweist, d.h. die Welle SW in Ausbreitungsrichtung auseinander läuft ("angular divergence"). Vorzugsweise gilt δθs ≥ Δθ.

Generell von Vorteil kann es sein, wenn - sowohl für ebene Schallwellen mit als auch ohne Öffnungswinkel - die Ausbreitungsrichtung der Schallwelle, insbesondere der ebenen Schallwelle, veränderbar ist. Insbesondere ist es von Vorteil, wenn die Ausbreitungsrichtung in Abhängigkeit von der Frequenz der Schallwellen oder der Änderung der Frequenz der Schallwellen veränderbar ist. Die Ausbreitungsrichtung wird dabei derart geändert, dass sich der Winkel zwischen dem einfallenden Laserstrahl und der Ausbreitungsrichtung der Schallwelle ändert. Dadurch kann sichergestellt werden, dass auch bei einer Änderung der Frequenz der Schallwellen der AOM nach wie vor im Bragg-Regime arbeitet.

Die Änderung der Richtung der Schallwelle kann beispielsweise durch die Verwendung von zwei oder mehreren Schallgebern erfolgen, welche z.B. mit unterschiedlicher Phasenlage betrieben werden.

Die Änderung der Richtung der Schallwelle kann alternativ oder zusätzlich beispielsweise dadurch erfolgen, dass der AOM, d.h. insbesondere das optische transparente Material und der zumindest eine Schallgeber drehbar angeordnet sind.

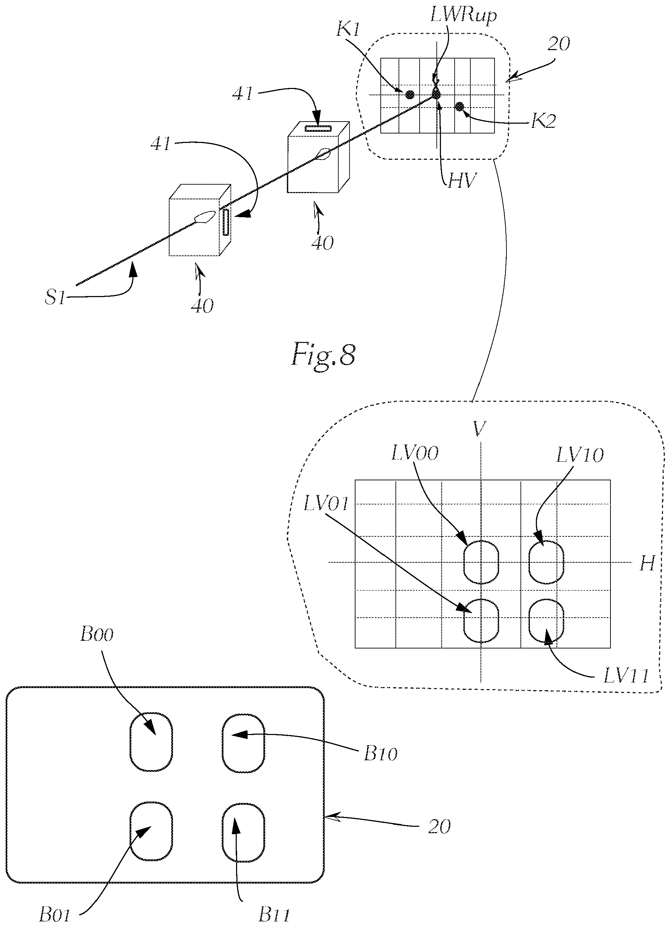

Figur 8 zeigt eine Beleuchtungsvorrichtung mit zwei AOMs 40, wobei der in Lichtausbreitungsrichtung gesehen erste AOM z.B. eine horizontale Ablenkung des Laserstrahls S1 bewirkt und der zweite AOM 40 eine vertikale Ablenkung des durch den ersten AOM 40 durchtretenden Laserstrahls bewirkt. Somit kann mit der gezeigten Beleuchtungsvorrichtung sowohl eine horizontale Ablenkung der erzeugten (Teil-)Lichtverteilung, z.B. für ein Kurvenlicht, als auch eine vertikale Ablenkung der erzeugten (Teil-)Lichtverteilung zur Einstellung der Höhe der Lichtverteilung, beispielsweise um die Reichweite einzustellen und/oder Blendung zur vermeiden, realisiert werden.

Werden beide AOMs mit ihrer jeweiligen Grundfrequenz betrieben, liegt der beleuchtete Fleck auf dem Konversionselement 20 beispielsweise in dem Bereich B00, wird die Frequenz des ersten AOM verändert, verschiebt sich der beleuchtete Bereich B00 horizontal nach B10 (Kurvenlicht), wird die Frequenz des zweiten AOM verändert, verschiebt sich der beleuchtete Bereich B00 vertikal nach B01. (Höhenverstellung), werden beide Frequenzen verändert, kommt es sowohl zu einer horizontalen als auch vertikalen Verschiebung nach B11. Entsprechend verschiebt sich im Lichtbild die erzeugte Lichtverteilung LV00 (entsprechend B00) nach LV10 (B10), LV01 (B01) bzw. LV11 (B11).

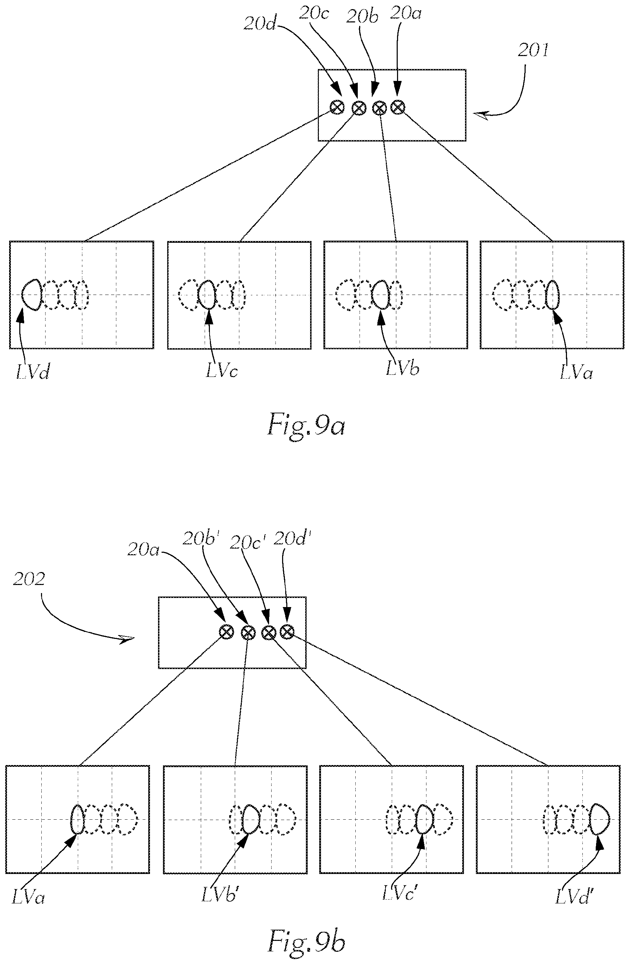

Figuren 9a - 9c zeigen eine Anordnung, bei welcher eine Matrix-Lichtverteilung realisiert wird. Die Bildwiederholungsraten liegen bei dieser Anwendung vorzugsweise im Kilohertz-bereich.

Fig. 9a symbolisiert einen linken Schweinwerfer, Fig. 9b symbolisiert einen rechten Scheinwerfer. Ein erstes Konversionselement 201, im Fahrzeug in einem linken Scheinwerfer verbaut, wird von einer ersten Laserlichtquelle über einen AOM gemäß der vorliegenden Erfindung beleuchtet (Fig. 9a). Mit dieser Anordnung wird ein linker Bereich im Lichtbild erzeugt. Figur 9b zeigt eine zweite Beleuchtungsvorrichtung, bei welcher ein zweites Konversionselement 202 - rechter Scheinwerfer, entsprechend der Erfindung mit Laserlicht bestrahlt werden kann. Gezeigt sind exemplarisch die vier Bereiche 20a' - 20d'. Mit dieser zweiten Beleuchtungsvorrichtung wird ein rechter Bereich im Lichtbild beleuchtet.

An dieser Stelle wird angemerkt, dass in diesem Beispiel wie auch in allen vorangegangenen Beispielen immer diskrete, abgegrenzte Bereiche dargestellt wurden, welche auf einem Konversionselement mit Laserlicht bestrahlt werden. Dies kann den tatsächlichen Gegebenheiten entsprechen, d.h., es kann vorgesehen sein, dass tatsächlich nur diskrete Bereiche des Konversionselementes beleuchtet werden (der Übergang erfolgt dann entweder so rasch, dass Zwischenpositionen im Lichtbild nicht oder kaum erkennbar sind oder es wird beim Ändern des beleuchteten Bereiches die Laserlichtquelle abgeschaltet), es kann aber auch eine "räumlich kontinuierliche" Ausleuchtung erfolgen, bei der der Übergang zwischen benachbarten beleuchteten Bereichen kontinuierlich erfolgt.

Gemäß der Erfindung können unterschiedliche Bereiche 20a - 20d des ersten Konversionselementes 201 der Reihe nach mit einer bestimmten Bildwiederholungsrate beleuchtet werden, je nach beleuchtetem Bereich 20a - 20d wird im Lichtbild eine Teillichtverteilung LVa - LVd im linken Bereich des Lichtbildes erzeugt. Weiters können unterschiedliche Bereiche 20a - 20d des ersten Konversionselementes 201 der Reihe nach mit der Bildwiederholungsrate beleuchtet werden, je nach beleuchtetem Bereich 20a - 20d wird im Lichtbild eine Teillichtverteilung LVa - LVd im linken Bereich des Lichtbildes erzeugt.

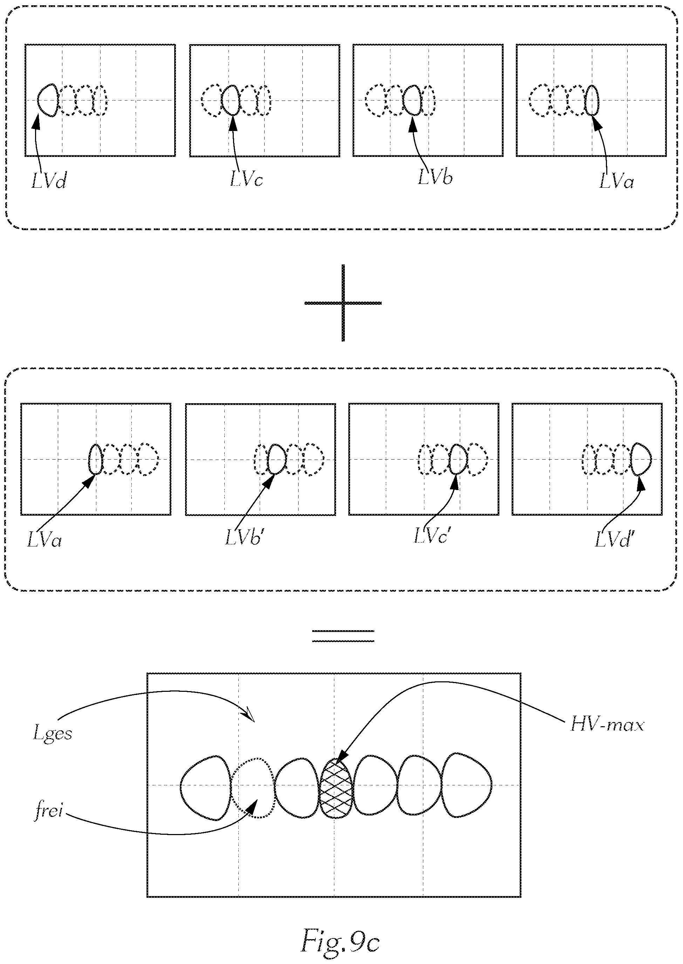

Figur 9c zeigt eine Gesamtlichtverteilung Lges erzeugt mit den beiden Beleuchtungsvorrichtungen, wie sie sich für einen Betrachter auf Grund der Bildwiederholungsrate als durchgehend beleuchtete Fläche zeigt. Da die einzelnen Teillichtbilder der Reihe nach hintereinander ausreichende schnell kurzfristig aktiviert werden, erscheint ein komplettes Lichtbild (Gesamtlichtverteilung).

Der Bereich HV-max symbolisiert ein Fernlichtmaximum, da sich Teillichtverteilungen der rechten und der linken Beleuchtungsvorrichtung in diesem Bereich überlagern. Der strichpunktierte Bereich frei stellt zusätzlich ein Ausblendszenario dar, bei dem der entsprechende Bereich im Lichtbild z.B. auf Grund von Gegenverkehr nicht beleuchtet wird, in dem der Laserlichtstrahl für den Zeitraum, in dem dieser Bereich nicht beleuchtet sein soll, nicht auf den entsprechenden Bereich auf dem Konversionselement gerichtet wird.

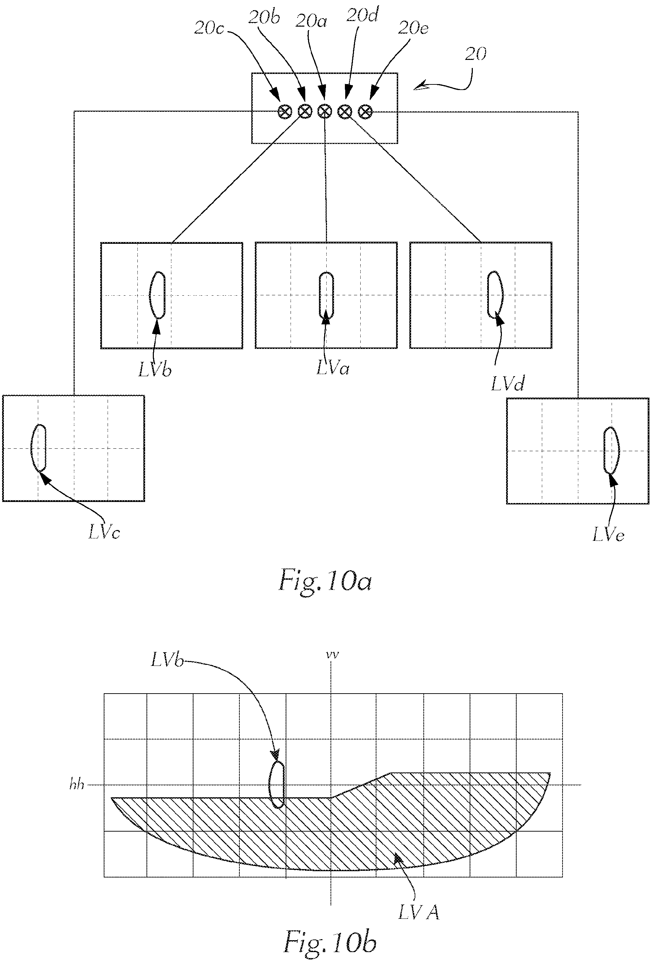

Figur 10a zeigt eine Anordnung in Analogie zu Figur 5. Ähnlich wie in Figur 5 dargestellt und beschrieben können durch Beleuchten von unterschiedlichen Bereichen 20a - 20e auf einem Konversionselement 20 unterschiedliche Teillichtverteilungen LVa - LVe erzeugt werden, welche entsprechend der Erfindung sich in horizontaler Richtung an unterschiedlichen Positionen befinden.

Figur 10b zeigt ein Abblendlichtverteilung LVA, welche z.B. mit einer eigenen Beleuchtungseinheit erzeugt wird. Durch Einschalten der Laserlichtquelle kann dieser Abblendlichtverteilung eine Teillichtverteilung überlagert werden, z.B. wie dargestellt durch Beleuchten des Bereiches LVb auf dem Konversionselement 20 die Teillichtverteilung LVb, sodass ein Objekt oder Subjekt in diesem Bereich gezielt angeleuchtet werden kann.

Eine erfindungsgemäße Beleuchtungsvorrichtung ist wie oben beschrieben vorzugsweise in ein Kraftfahrzeug eingebaut. Die Beleuchtungsvorrichtung ist dabei Teil eines Fahrzeugscheinwerfers oder die Beleuchtungsvorrichtung bildet einen Fahrzeugscheinwerfer.

Wie oben beschrieben ist eine Steuereinrichtung 41 vorgesehen, mit welcher der eine oder die gegebenenfalls zwei oder mehreren AOMs angesteuert werden. Falls dies für die konkrete Anwendung notwendig ist, kann die Steuereinrichtung zusätzlich auch die Lichtquelle ansteuern.

Die Steuereinrichtung 41 kann Teil der Beleuchtungsvorrichtung sein, sie kann aber auch Teil des Fahrzeugscheinwerfers oder des Kraftfahrzeugs sein.

Vorzugsweise steuert die Steuereinrichtung den oder die AOMs an Hand von Steuerparameter an, aus welchen sich der gewünschte Ablenkwinkel der Lichtverteilung bzw. einer Teil-lichtverteilung im Lichtbild bzw. in einer Gesamtlichtverteilung ergibt.

Diese Steuerparameter zu einem definierten Zeitpunkt bzw. in einem definierten Zeitintervall hängen vom Zustand des Kraftfahrzeuges, vorzugsweise vom Zustand zu diesem definierten Zeitpunkt/in diesem definierten Zeitintervall bzw. von einem Zustand des Kraftfahrzeuges in einem Zeitintervall um diesen definierten Zeitpunkt, ab.

Der Zustand des Kraftfahrzeuges kann beispielsweise beschrieben werden bzw. sich beispielsweise ergeben aus den folgenden Fahrzeug-"Eigenschaften":

- z.B. Lenkeinschlag des Fahrzeuges;

- Geschwindigkeit des Fahrzeuges;

- Beschleunigung des Fahrzeuges;

- Position des Fahrzeuges, wobei sich die Positions-Daten z.B. aus einem Navigationsgerät des Fahrzeuges ergeben;

- Kameradaten der Fahrzeugumgebung (beispielsweise Art und Ort anderer Verkehrsteilnehmer bzw. Objekte);

- Straßenzustand;

- Straßenverlauf (Kurven, Kuppen, Senken).

Diese Aufzählung ist lediglich beispielhaft und es können sich die Steuerparameter aus beliebigen Kombinationen der oben angeführten und weiterer oben angeführter Fahrzeug- und/ oder Umgebungseigenschaften etc. (als Fahrzeug-" Eigenschaften" bezeichnet) ergeben, wobei sich der Zustand zu unterschiedlichen Zeitpunkten bzw. Zeitintervallen jeweils auch aus unterschiedlichen Fahrzeug-"Eigenschaften" ergeben kann.

**Patentansprüche**

1. Beleuchtungsvorrichtung (100), insbesondere für ein Kraftfahrzeug, umfassend:

zumindest eine Laser-Lichtquelle (10) zur Erzeugung von Anregungs-Licht;
zumindest ein Wellenlängen-Konversionselement (20), welches dazu eingerichtet ist, Anregungs-Licht von der zumindest einen Laser-Lichtquelle (10) in Form eines Anregungs-Licht-Lichtbündels zu empfangen;
zumindest ein optisches Abbildungselement (30a, 30b, 30c; 31; 32), welches von dem Wellenlängen-Konversionselement (20) im sichtbaren Wellenlängenbereich emittiertes Licht in Form von zumindest einer Lichtverteilung bzw. einer Teil-Lichtverteilung (LVa, LVb, LVc, LVd, LVe) abbildet; und
zumindest eine Strahlumlenkeinrichtung im Strahlengang zwischen der zumindest einen Laser-Lichtquelle (10) und dem zumindest einen Wellenlängen-Konversionselement (20),
**dadurch gekennzeichnet, dass**
die zumindest eine Strahlumlenkeinrichtung als akusto-optischer Modulator (40) ausgebildet ist, welcher ein zumindest für Anregungs-Licht der zumindest einen Laserlichtquelle (10) optisch transparentes Festkörper-Medium (40a) umfasst, welches mit dem Anregungs-Licht-Lichtbündel durchstrahlt wird, und wobei Schallwellen mit einer Frequenz oder mehreren, insbesondere unterschiedlichen Frequenzen in dem Festkörper-Medium (40a) des akusto-optischen Modulator (40) erzeugbar sind - beispielsweise mit einer Steuereinrichtung (41), welche den zumindest einen akusto-optischen Modulator (40) vorzugsweise entsprechend vorgegebener oder vorgebbarer Steuerparameter ansteuert -, sodass das Anregungs-Licht-Lichtbündel in Abhängigkeit von der Frequenz der angelegten Schallwellen auf unterschiedliche Bereiche (20a, 20b, 20c; 20a, 20b, 20c, 20d, 20e) eines Konversionselement (20) und/oder auf unterschiedliche Konversionselemente abgelenkt wird, wobei die Frequenzen der Schallwellen in einem Bereich von 80 - 2500 MHz liegen

2. Beleuchtungsvorrichtung nach Anspruch 1, **dadurch gekennzeichnet, dass** zwischen einem ersten akusto-optischen Modulator und dem zumindest einen Wellenlängen-Konversionselement ein zweiter akusto-optischer Modulator angeordnet ist, dessen Festkörper-Medium von dem aus dem ersten akusto-optischen Modulator austretenden Anregungs-Licht durchstrahlt wird, und wobei vorzugsweise der zweite und der erste akusto-optische Modulator derart zueinander angeordnet sind, dass die Ausbreitungsrichtung der Schallwellen in den beiden akusto-optischen Modulatoren orthogonal zueinander stehen.

3. Beleuchtungsvorrichtung nach Anspruch 1 oder 2, **dadurch gekennzeichnet, dass** die Frequenz der an dem zumindest einen akusto-optischen Modulator (40) angelegten Schallwellen zeitlich variiert ist, beispielsweise indem die Steuereinrichtung (41) dazu eingerichtet ist, die Frequenz der Schallwellen zeitlich zu variieren.

4. Beleuchtungsvorrichtung nach einem der Ansprüche 1 bis 3, **dadurch gekennzeichnet, dass** die erzeugten Schallwellen ebene Wellen (SW) sind.

5. Beleuchtungsvorrichtung nach einem der Ansprüche 1 bis 4, **dadurch gekennzeichnet, dass** der zumindest eine akusto-optische Modulator (40) im Bragg-Regime betrieben wird, wobei vorzugsweise zur Ablenkung des Anregungs-Licht-Lichtbündels aus einer Grundposition auf dem Konversionselement die dieser Grundposition entsprechende Grundfrequenz $f_0$ um einen Betrag von $+\Delta f$ variiert wird, wobei vorzugsweise die Frequenzänderung kontinuierlich oder in diskreten Schritten erfolgt.

6. Beleuchtungsvorrichtung nach einem der Ansprüche 1 bis 5, **dadurch gekennzeichnet, dass** genau ein optisches Abbildungselement (31, 32) oder für jedes Konversionselement (20) genau ein optisches Abbildungselement (31, 32) vorgesehen ist.

7. Beleuchtungsvorrichtung nach einem der Ansprüche 1 bis 6, **dadurch gekennzeichnet, dass** für jeden Bereich (20a, 20b, 20c) eines Konversionselement (20), in welchen Anregungs-Licht ablenkbar ist, genau ein optisches Abbildungselement (30a, 30b, 30c) vorgesehen ist.

8. Beleuchtungsvorrichtung nach einem der Ansprüche 1 bis 7, **dadurch gekennzeichnet, dass** zwischen dem zumindest einen Konversionselement (20) und dem zumindest einen akusto-optischen Modulator (40) eine optische Umlenkeinrichtung (50) angeordnet ist, welche aus dem zumindest einen akusto-optischen Modulator (40) bzw. jenem akusto-optischen Modulator, welcher dem Konversionselement (20) am nächsten liegt, austretendes Anregungs-Licht parallel zur einer Grundbeugungsrichtung bzw. normal zu einer Applikationsebene des Konversionselementes (20), auf welche das Anregungs-Licht auftrifft, umlenkt, wobei vorzugsweise die Umlenkeinrichtung (50) eine Linsenanordnung für ein telezentrisches Objektiv umfasst bzw. daraus besteht.

9. Beleuchtungsvorrichtung nach einem der Ansprüche 1 bis 8, **dadurch gekennzeichnet, dass** zwischen dem zumindest einen Konversionselement (20) und dem zumindest einen akusto-optischen Modulator (40) eine optische Umlenkeinrichtung (50) angeordnet ist, welche aus dem zumindest einen akusto-optischen Modulator (40) bzw. jenem akusto-optischen Modulator, welcher dem Konversionselement (20) am nächsten liegt, austretendes Anregungs-Licht derart ablenkt, dass unabhängig vom Ablenkwinkel auf einem planen Konversionselement gleich große Laserlicht-Spots erzeugt werden, wobei vorzugsweise die Umlenkeinrichtung (50) eine F-Theta-Linse oder eine F-Theta-Linsenanordnung oder eine Linsenanordnung, welche zumindest eine F-Theta Linse umfasst, umfasst bzw. daraus besteht.

10. Beleuchtungsvorrichtung nach einem der Ansprüche 1 bis 9, **dadurch gekennzeichnet, dass** die Beleuchtungsvorrichtung in ein Kraftfahrzeug eingebaut ist und die Steuerparameter zu einem definierten Zeitpunkt von einem Zustand des Kraftfahrzeuges zu diesem definierten Zeitpunkt bzw. von einem Zustand des Kraftfahrzeuges in einem Zeitintervall um diesen definierten Zeitpunkt abhängen.

11. Beleuchtungsvorrichtung nach einem der Ansprüche 1 bis 10, **dadurch gekennzeichnet, dass** die erzeugte Lichtverteilung oder Teillichtverteilung in horizontaler und/oder vertikaler Richtung verschiebbar ist, wobei vorzugsweise die erzeugte Teillichtverteilung einen Teil einer Fernlichtverteilung, insbesondere einen Maximum-Spot der Fernlichtverteilung, bildet.

12. Beleuchtungsvorrichtung nach einem der Ansprüche 1 bis 11, **dadurch gekennzeichnet dass** die Schallwellen, insbesondere die ebenen Schallwellen in dem Festkörper-Medium (40a) einen Öffnungswinkel $\delta\theta_S$ aufweist, wobei vorzugsweise gilt, dass $\delta\theta_S \geq \Delta\theta$, wobei $\Delta\theta$ der maximale Ablenkwinkel des Laserstrahls aus einer Grundbeugungsrichtung ist.

13. Beleuchtungsvorrichtung nach einem der Ansprüche 1 bis 12, **dadurch gekennzeichnet, dass** die Ausbreitungsrichtung der Schallwellen, insbesondere der ebenen Schallwellen, veränderbar ist, wobei vorzugsweise die Ausbreitungsrichtung in Abhängigkeit von der Frequenz der Schallwellen oder der Änderung der Frequenz der Schallwellen veränderbar ist.

14. Kraftfahrzeugscheinwerfer mit einer oder mehreren Beleuchtungsvorrichtungen nach einem der Ansprüche 1 bis 13.


**Claims**

1. An illumination apparatus (100), in particular for a motor vehicle, comprising:

   at least one laser light source (10) for producing excitation light;
   at least one wavelength conversion element (20), which is configured to receive excitation light from the at least one laser light source (10) in the form of an excitation-light light bundle;
   at least one optical imaging element (30a, 30b, 30c; 31; 32), which images light, which is emitted in the visible wavelength range by the wavelength conversion element (20), in the form of at least one light distribution or one partial light distribution (LVa, LVb, LVc, LVd, LVe), and
   at least one beam-deflecting device in the beam path between the at least one laser light source (10) and the at least one wavelength conversion element (20),
   **characterised in that**
   the at least one beam-deflecting device is designed as an acousto-optic modulator (40), which comprises a solid medium (40a), which is optically transparent at least to excitation light of the at least one laser light source (10) and through which the excitation-light light bundle is passed, and wherein sound waves having a frequency or a plurality of, in particular, different frequencies can be produced in the solid medium (40a) of the acousto-optic modulator (40) - for example by means of a control device (41), which controls the at least one acousto-optic modulator (40) preferably in accordance with specified or specifiable control parameters -, such that the excitation-light light bundle is deflected to different regions (20a, 20b, 20c; 20a, 20b, 20c, 20d, 20e) of a conversion element (20) and/or to different conversion elements in accordance with the frequency of the applied sound waves, wherein the frequencies of the sound waves lie in a range from 80 to 2500 MHz.

2. The illumination apparatus according to claim 1, **characterised in that** a second acousto-optic modulator is arranged between a first acousto-optic modulator and the at least one wavelength conversion element, the solid medium of said second acousto-optic modulator being passed through by the excitation light exiting from the first acousto-optic modulator, and wherein preferably the second and the first acousto-optic modulator are arranged relative to one another in such a way that the direction of propagation of the sound waves in the two acousto-optic modulators are orthogonal to one another.

3. The illumination apparatus according to claim 1 or 2, **characterised in that** the frequency of the sound waves applied to the at least one acousto-optic modulator (40) is varied over time, for example **in that** the control device (41) is configured to vary the frequency of the sound waves over time.

4. The illumination apparatus according to any one of claims 1 to 3, **characterised in that** the produced sound waves are flat waves (SW).

5. The illumination apparatus according to any one of claims 1 to 4, **characterised in that** the at least one acousto-optic modulator (40) is operated in the Bragg regime, wherein preferably for deflection of the excitation-light light bundle from a basic position on the conversion element, the basic frequency $f_0$ corresponding to this basic position is preferably varied by a value of + Δf, wherein preferably the frequency change occurs continuously or in discrete steps.

6. The illumination apparatus according to any one of claims 1 to 5, **characterised in that** exactly one optical imaging element (31, 32) is provided or exactly one optical imaging element (31, 32) for each conversion element (20) is provided.

7. The illumination apparatus according to any one of claims 1 to 6, **characterised in that** exactly one optical imaging element (30a, 30b, 30c) is provided for each region (20a, 20b, 20c) of a conversion element (20) in which excitation light can be deflected.

8. The illumination apparatus according to any one of claims 1 to 7, **characterised in that** an optical deflecting device (50) is arranged between the at least one conversion element (20) and the at least one acousto-optic modulator (40), which deflecting device deflects excitation light, exiting from the at least one acousto-optic modulator (40) or the acousto-optic modulator arranged closest to the conversion element (20), parallel to a basic diffraction direction or normal to an application plane of the conversion element (20) on which the excitation light is incident, wherein preferably the deflecting device (50) comprises or consists of a lens arrangement for a telecentric objective.

9. The illumination apparatus according to any one of claims 1 to 8, **characterised in that** an optical deflecting device (50) is arranged between the at least one conversion element (20) and the at least one acousto-optic modulator (40), which deflecting device deflects excitation light, exiting from the at least one acousto-optic modulator (40) or the acousto-optic modulator arranged closest to the conversion element (20), in such a way that laser light spots of equal size are produced on a planar conversion element regardless of the angle of deflection, wherein preferably the deflecting device (50) comprises an f-theta lens or an f-theta lens arrangement or a lens arrangement that comprises or consists of at least one f-theta lens.

10. The illumination apparatus according to any one of claims 1 to 9, **characterised in that** the illumination apparatus is installed in a motor vehicle, and the control parameters at a defined moment in time are dependent on a state of the motor vehicle at this defined moment in time or are dependent on a state of the motor vehicle within a time period around this defined moment in time.

11. The illumination apparatus according to any one of claims 1 to 10, **characterised in that** the produced light distribution or partial light distribution can be displaced in the horizontal and/or vertical direction, wherein preferably the produced partial light distribution forms part of a main beam distribution, in particular a maximum spot of the main beam distribution.

12. The illumination apparatus according to any one of claims 1 to 11, **characterised in that** the sound waves, in particular the flat sound waves, have an angle of aperture $\delta\theta_S$ in the solid medium (40a), wherein preferably $\delta\theta_S \geq \Delta\theta$, wherein $\Delta\theta$ is the maximum angle of deflection of the laser beam from a basic diffraction direction.

13. The illumination apparatus according to any one of claims 1 to 12, **characterised in that** the direction of propagation of the sound waves, in particular of the flat sound waves, can be changed, wherein the direction of propagation preferably can be changed according to the frequency of the sound waves or the change in frequency of the sound waves.

14. A motor vehicle headlamp having one or more illumination apparatuses according to any one of claims 1 to 13.

**Revendications**

1. Dispositif d'éclairage (100), en particulier pour un véhicule automobile, comportant :

au moins une source de lumière laser (10) pour la production d'une lumière d'excitation ;
au moins un élément de conversion de longueur d'onde (20), lequel est conçu pour recevoir de la lumière d'excitation de ladite au moins une source de lumière laser (10) sous forme d'un faisceau lumineux de lumière d'excitation ;
au moins un élément d'imagerie optique (30a, 30b, 30c ; 31 ; 32), lequel image de la lumière, émise dans la plage de longueur d'onde visible par l'élément de conversion de longueur d'onde (20), sous forme d'au moins une distribution de lumière ou d'une distribution partielle de lumière (LVa, LVb, LVc, LVd, LVe) ; et
au moins un dispositif de déviation de faisceau dans le trajet de faisceau entre ladite au moins une source de lumière laser (10) et ledit au moins un élément de conversion de longueur d'onde (20),

**caractérisé par le fait que**

ledit au moins un dispositif de déviation de faisceau est conçu en tant que modulateur acousto-optique (40), lequel comporte un milieu à l'état solide (40a) optiquement transparent à la lumière d'excitation de ladite au moins une source de lumière laser (10), à travers lequel passe le faisceau lumineux de lumière excitation, et dans lequel des ondes sonores ayant une fréquence ou plusieurs fréquences, en particulier plusieurs fréquences différentes, sont aptes à être produites dans le milieu à l'état solide (40a) du modulateur acousto-optique (40) - par exemple au moyen d'un dispositif de commande (41), lequel commande ledit au moins un modulateur acousto-optique (40) de préférence conformément à des paramètres de commande spécifiés ou aptes à être spécifiés - de telle sorte que le faisceau lumineux de lumière d'excitation est dévié sur différentes zones (20a, 20b, 20c ; 20a, 20b, 20c, 20d, 20e) d'un élément de conversion (20) et/ou sur différents éléments de conversion en fonction de la fréquence des ondes sonores appliquées, les fréquences des ondes sonores se situant dans une plage de 80 - 2500 MHz.

2. Dispositif d'éclairage selon la revendication 1, **caractérisé par le fait qu'**entre un premier modulateur acousto-optique et ledit au moins un élément de conversion de longueur d'onde, est disposé un second modulateur acousto-optique dont le milieu à l'état solide est traversé par la lumière d'excitation sortant du premier modulateur acousto-optique, et dans lequel, de préférence, le second et le premier modulateur acousto-optique sont disposés l'un par rapport à l'autre de telle sorte que les directions de propagation des ondes sonores dans les deux modulateurs acousto-optiques sont orthogonales l'une par rapport à l'autre.

3. Dispositif d'éclairage selon l'une des revendications 1 ou 2, **caractérisé par le fait que** la fréquence des ondes sonores appliquées audit au moins un modulateur acousto-optique (40) varie dans le temps, par exemple en ce que le dispositif de commande (41) est conçu pour faire varier dans le temps la fréquence des ondes sonores.

4. Dispositif d'éclairage selon l'une des revendications 1 à 3, **caractérisé par le fait que** les ondes sonores produites sont des ondes planes (SW).

5. Dispositif d'éclairage selon l'une des revendications 1 à 4, **caractérisé par le fait que** ledit au moins un modulateur acousto-optique (40) est actionné dans le régime de Bragg, dans lequel, de préférence, pour la déviation du faisceau lumineux de lumière d'excitation à partir d'une position de base sur l'élément de conversion, la fréquence de base $f_0$ correspondant à cette position de base varie d'une quantité de $+\Delta f$, dans lequel, de préférence, la variation de fréquence a lieu en continu ou en étapes discrètes.

6. Dispositif d'éclairage selon l'une des revendications 1 à 5, **caractérisé par le fait qu'**exactement un élément d'imagerie optique (31, 32) est prévu ou pour chaque élément de conversion (20) exactement un élément d'imagerie optique (31, 32) est prévu.

7. Dispositif d'éclairage selon l'une des revendications 1 à 6, **caractérisé par le fait que,** pour chaque zone (20a, 20b, 20c) d'un élément de conversion (20), dans laquelle une lumière d'excitation peut être déviée, exactement un élément d'imagerie optique (30a, 30b, 30c) est prévu.

8. Dispositif d'éclairage selon l'une des revendications 1 à 7, **caractérisé par le fait qu'**entre ledit au moins un élément de conversion (20) et ledit au moins un modulateur acousto-optique (40), est disposé un dispositif de déviation optique (50), lequel dévie de la lumière d'excitation sortant dudit au moins un modulateur acousto-optique (40) ou du modulateur acousto-optique qui se situe le plus près de l'élément conversion (20) parallèlement à une direction de diffraction de base ou perpendiculairement à un plan d'application de l'élément de conversion (20) sur lequel la lumière d'excitation frappe, dans lequel, de préférence, le dispositif de déviation (50) comporte ou consiste en un agencement de lentilles pour un objectif télécentrique.

9. Dispositif d'éclairage selon l'une des revendications 1 à 8, **caractérisé par le fait qu'**entre ledit au moins un élément de conversion (20) et ledit au moins un modulateur acousto-optique (40), est disposé un dispositif de déviation optique (50), lequel dévie de la lumière d'excitation sortant dudit au moins un modulateur acousto-optique (40) ou du modulateur acousto-optique qui se situe le plus près de l'élément de conversion (20), de telle sorte que des spots de lumière laser d'égale dimension sont produits sur un élément de conversion plan indépendamment de l'angle de déviation, dans lequel, de préférence, le dispositif de déviation (50) comporte ou consiste en une lentille F-thêta ou un agencement de lentilles F-thêta, ou un agencement de lentilles lequel comporte au moins une lentille F-thêta.

10. Dispositif d'éclairage selon l'une des revendications 1 à 9, **caractérisé par le fait que** le dispositif d'éclairage est installé dans un véhicule automobile et les paramètres de commande à un instant défini dépendent d'un état du véhicule automobile à cet instant défini ou d'un état du véhicule automobile dans un intervalle de temps autour de cet instant défini.

11. Dispositif d'éclairage selon l'une des revendications 1 à 10, **caractérisé par le fait que** la distribution de lumière ou distribution partielle de lumière produite est déplaçable en direction horizontale et/ou verticale, dans lequel, de préférence, la distribution partielle de lumière produite forme une partie d'une distribution de feu de route, en particulier un spot maximal de la distribution de feu de route.

12. Dispositif d'éclairage selon l'une des revendications 1 à 11, **caractérisé par le fait que** les ondes sonores, en particulier les ondes sonores planes, présentent un angle d'ouverture $\delta\theta_s$ dans le milieu à l'état solide (40a), dans lequel, de préférence, $\delta\theta_s \geq \Delta\theta$, où $\Delta\theta$ est l'angle de déviation maximal du faisceau laser à partir d'une direction de diffraction de base.

13. Dispositif d'éclairage selon l'une des revendications 1 à 12, **caractérisé par le fait que** la direction de propagation des ondes sonores, en particulier des ondes sonores planes, est modifiable, dans lequel, de préférence, la direction de déviation est modifiable en fonction de la fréquence des ondes sonores ou de la variation de la fréquence des ondes sonores.

14. Phare de véhicule automobile comportant un ou plusieurs dispositifs d'éclairage selon l'une des revendications 1 à 13.

Fig.1

Fig.2

Fig.3

Fig.11 (Stand der Technik)

Fig.4

Fig.5

EP 3 283 816 B1

Fig.6

Fig.7

Fig.8

Fig.9a

Fig.9b

Fig.9c

20c  20b  20a  20d  20e

20

LVb

LVa

LVd

LVc

LVe

*Fig.10a*

LVb

vv

hh

LV A

*Fig.10b*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3133336 A1

- WO 2015019537 A1